(19) Europäisches Patentamt
European Patent Office
Office européen des brevets

(11) **EP 2 248 415 B1**

(12) **EUROPEAN PATENT SPECIFICATION**

(45) Date of publication and mention
of the grant of the patent:
**21.09.2011 Bulletin 2011/38**

(51) Int Cl.:
***A01K 31/22*** *(2006.01)* ***A01K 39/012*** *(2006.01)*

(21) Application number: **09179847.0**

(22) Date of filing: **18.12.2009**

(54) **Apparatus designed to increase the accomodation capacity of cages for laying hen farming**

Vorrichtung zum Erhöhen der Kapazität von Hühnerkäfigen

Installation pour augmenter la capacité des cages pour poules

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.12.2008 IT MC20080236**

(43) Date of publication of application:
**10.11.2010 Bulletin 2010/45**

(73) Proprietor: **O.M.A.Z. Srl**
**62012 Civitanova Marche (MC) (IT)**

(72) Inventor: **Bastari, Maurizio**
**60022, Castelfidardo (AN) (IT)**

(74) Representative: **Baldi, Claudio**
**Ing. Claudio Baldi S.r.l.**
**Viale Cavallotti, 13**
**60035 Jesi (Ancona) (IT)**

(56) References cited:
**FR-A- 2 058 556   GB-A- 679 261**

**Description**

The present patent application for industrial invention relates to an apparatus designed to increase the accommodation capacity of the cages used for laying hen farming.

As it is known, laying hen farming is traditionally organised in large automated plants.

In such places the hens are contained in parallelepiped cages mounted on multiple overlapped rows and associated with suitable automatic devices designed to guarantee the collection of the eggs and the feeding of the animals in the most suitable way.

Each horizontal row of the cages is frontally associated with a continuous horizontal channel in projecting position used as feedbox that is periodically and automatically filled with feed by a sliding dispenser-hopper in upper position.

Of course, the cages equipped with such an automatic feeding system are provided on the front with small doors through which the hens can easily insert their heads and reach the feed contained in the feedbox.

It must be noted that the cages used by all farmers have standard dimensions (i.e. length, width and height) that cannot be modified, being determined to optimise storage and transportation modes.

Based on this general configuration, the aforesaid technology has been recently subjected to Community regulations in order to improve the life conditions of the laying hens farmed in cages.

In particular, it has been established that a section of the feedbox with length not lower than 12 cm and liveable surface of 750 cm$^2$ must be exclusively available for each hen contained in a cage.

In view of the above, for example, a cage with 120 cm length (frontally provided with a feedbox having the same length) cannot accommodate more than ten hens. Therefore, a width higher than 62.5 cm would be completely useless.

It can be otherwise said that the maximum width of the current cages is determined according to the following ratio:

$$750 \text{ cm}^2 \text{ (cage area for each hen)} \times 10 \text{ hens} / 12 \text{ cm (feedbox section for each hen)} \times 10 \text{ hens} = 62.5 \text{ cm.}$$

This normative tends to create a disadvantageous underutilization of the cages with standardised dimensions; this is due to the fact that, in spite of having a total internal surface suitable to accommodate more hens (following to a width increase), the number of hens would still be the one determined according to the ratio between number of animals and total length of the feedbox.

A second significant new principle of the normative provides for equipping the cages for laying hens with an internal device (associated with a corresponding feeding device) that allows them to scratch about and peck.

This mandatory requirement has forced manufacturers of cages for laying hens to introduce some technical improvements in the structure of the cage to guarantee the additional functionality.

A careful examination of these technical problems had resulted in a new apparatus for the automatic feeding of laying hens farmed in cages with standard dimensions, able to overcome both problems aroused from the recent community normative.

In actual fact, the main purpose of the present invention is to give a cage with standard dimensions the capability to guarantee correct feeding modes (according to said community parameters related to the ratio between the number of hens and the length of the feedbox) to a higher number of animals compared to the current situation.

Such a result has been achieved by mounting a second feedbox arranged in internal position on a lateral wall of the feedbox, in addition to the traditional feedbox installed on the front of each cage.

This means that if the higher number of hens accommodated in the cage can still refer to the main external feedbox arranged on the front, an additional (although lower) number of hens can use the additional or "secondary" feedbox arranged in lateral position.

In this way, the potential accommodation capacity of a cage can be used completely, while still complying with the binding parameter that imposes a minimum "feeding" space for each hen calculated on the length of the feedbox mounted in the cage.

One of the main features of the inventive idea is related with the provision of a series of technical measures that make it possible to load the feed in the additional lateral feedbox automatically and simultaneously by the sliding dispenser-hopper that traditionally loads the main front feedbox.

Moreover, the provision of the additional internal feedbox has also permitted to provide for a sort of controlled overflow of small quantities of feed towards the bottom wall of the cage to favour the scratching and pecking of the hens accommodated in the cage.

For purposes of clarity, the description of the invention continues with reference to the enclosed drawings, which are intended for purposes of illustration only and not in a limiting sense, wherein:

- figure 1 is an internal view of the lateral wall of a cage equipped with the apparatus of the invention;
- figure 2 is an axonometric view of figure 1, with the dispenser-hopper in non-operating position;
- figure 3 is the same as figure 2, except for it shows the dispenser-hopper in operating position.

First of all, it is reiterated that the present invention is designed to be used with traditional parallelepiped cages for laying hens, of the type designed to provide automatic feeding.

These cages are normally used for the so-called batteries formed of multiple overlapped rows of similar cages.

It must be noted that each horizontal row of cages (1) is provided with a main feedbox (2), which basically consists in a horizontal channel that protrudes on the front of the cages (1), basically at the same height as the horizontal bottom wall (3) of the cage.

In particular, the bottom wall (3) has a basically overturned-V profile shaped as a roof; it being provided that the opposite slopes given to the two pitches (3a, 3b) of the bottom wall (3) spontaneously convey (by gravity) the eggs laid by the hens towards the outside of the cage, respectively on the front and the back of the cage.

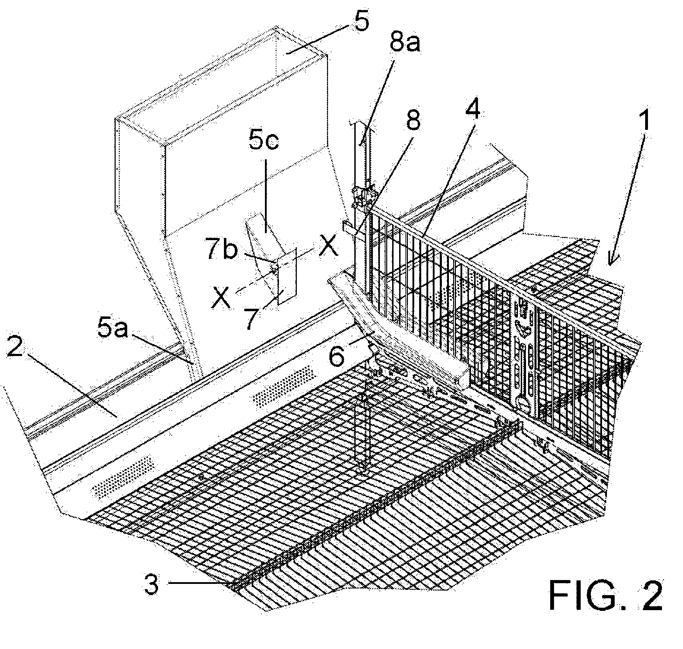

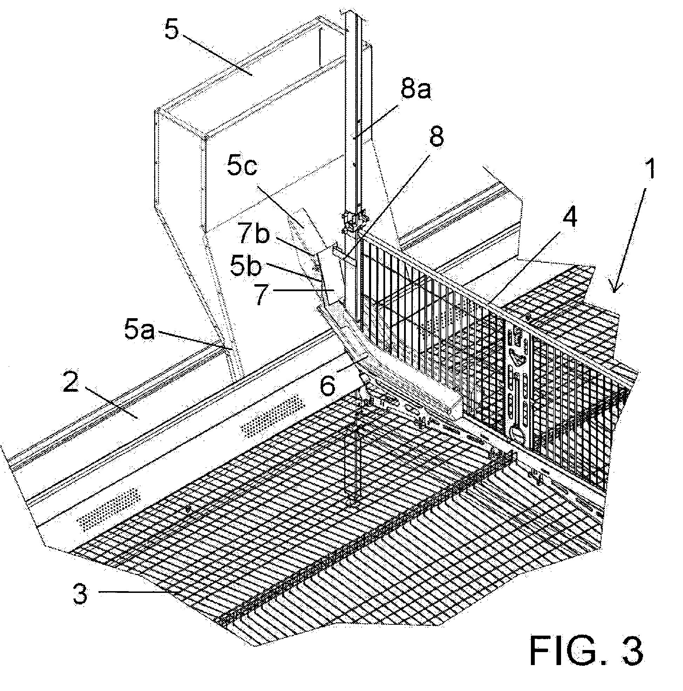

For graphic simplicity purposes, figures 2 and 3 contain a partial representation of the cage of the invention (1), which shows only the bottom grated wall (3) (and not the corresponding upper horizontal wall) and only one lateral grated wall (4) of the four walls of the cage.

Considering that these figures refer to traditional battery cages, it can be easily understood that, in this case, in addition to being defined by a common bottom wall (3), the cages (1) of the same horizontal row are also separated by means of a common lateral wall (4) that can be considered as a real partition wall with grated structure.

Moreover, the enclosed figures show the presence of a traditional dispenser-hopper (5) in external position on the front wall of the cages (1), which is loaded with feed and adapted to alternatively slide from one end to the other end of the row, being automatically driven by suitable actuators.

The sliding dispenser-hopper (5) is designed to fill the main feedbox (2) on a periodical basis; to that end, the nozzle (5a) provided at the lower end of the dispenser-hopper (5) is inserted into the longitudinal cavity of the main feedbox (2).

Evidently, the hens accommodated in each cage (1) can comfortably reach the feed contained in the main feedbox (2) only if they insert their head and neck in the windows obtained on the front wall of the cages (1) at a slightly higher height than the feedbox (2).

Starting from the traditional art, the apparatus of the invention comprises a secondary feedbox (6) mounted in internal position on one of the lateral grated walls (4) of each cage (1) for laying hens.

With reference to figures 2 and 3, the secondary feedboxes (6) for two contiguous cages are preferably mounted on opposite sides on the common grated partition wall (4).

Each secondary feedbox (6) basically consist in a slide-shaped channel mounted in such a way that the end at the highest height - which is basically the opening (6a) - shortly protrudes on the outside of the front wall of the cage (1).

The end (6b) of the channel (6) that tends to have a basically horizontal direction is the end that should be preferably used by the hens for feeding.

The second component of the apparatus of the invention consists in a dispenser-hopper (5) with double nozzle provided with a second dispensing nozzle (5b) in addition to the traditional nozzle (5a) provided at the base of the dispenser-hopper (5).

In particular, the second nozzle (5b) is provided at the lower end of an inclined conduit (5c) with downward direction, which protrudes approximately from the centre of the back wall of the dispenser-hopper (5), being the one facing the front wall of the cages (1) of the same horizontal row.

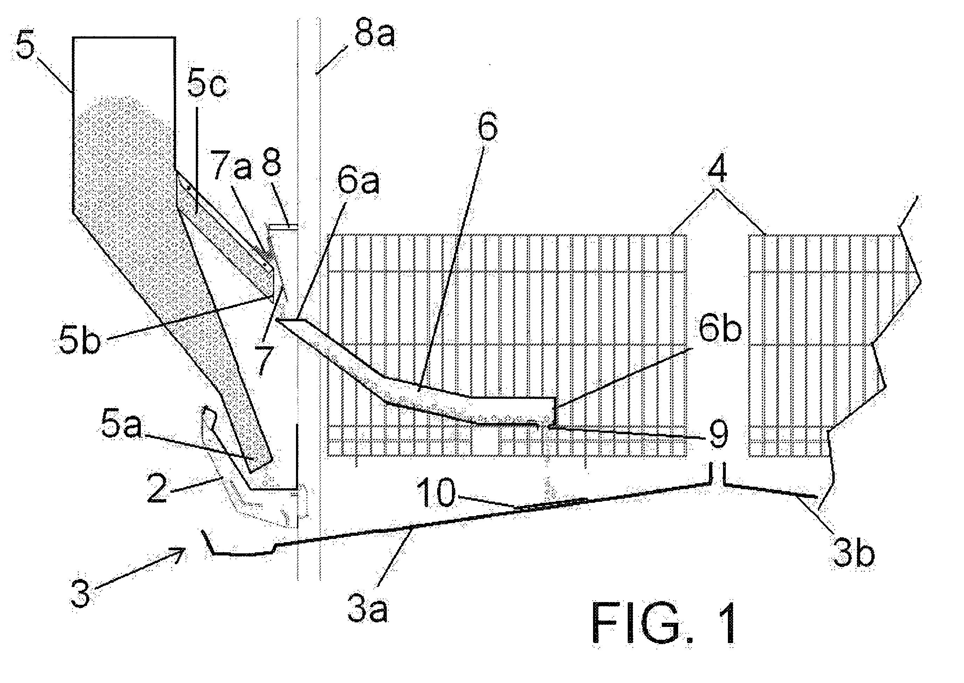

As shown in the enclosed figures, the additional nozzle (5b) is arranged at an immediately higher height than the openings (6a) of the secondary feedboxes (6) mounted on the lateral walls (4) of the cages (1), as shown in fig. 1.

Moreover, the additional nozzle (5b) is provided with an oscillating door (7) that, being subjected to the action of a return spring (7a), normally tends to be in contact with the nozzle (5b), thus closing it to prevent the free outflow of the feed contained in the inclined conduit (5c).

More precisely, as shown in figures 2 and 3, the door (7) is pivoted at the upper end along an axis (X-X) orthogonal to the longitudinal axis of the inclined conduit (5c); it being also provided that the door (7) is provided at an immediately higher height than the pivoting axis (X-X) with two horizontal ears (7b) that protrude outwards from opposite sides with slight backward inclination.

Another component of the apparatus of the invention consists in a horizontal rod (8) with rounded end, which protrudes on the front of one of the grated partition walls (4) that separate the pairs of cages (1) of the same horizontal row.

Each rod (8) must be situated at a basically higher position than the opening (6a) of each secondary feedbox (6), being provided with suitable height to interfere with the lateral ears (7b) of the door (7) mounted at the end of the inclined conduit mounted on the back of the dispenser-hopper (5).

The embodiment shown in figures 2 and 3, in which the openings (6a) of the secondary feedboxes (6) for two contiguous cages (1) are situated in adjacent position, is provided with only one rod (8) that simultaneously cooperates with both feedboxes (6), being situated in exactly intermediate position between them, and being mounted against the vertical wall (8a) that supports the grated wall (4) between two cages (1).

According to operation principle of the apparatus of the invention, the sliding dispenser-hopper (5) travels from one end to the other end of the same horizontal row of cages (1), with progressive transfer of the feed contained in it along the main feedbox (2) by means of the lower nozzle (5a).

During the forward travel of the dispenser-hopper (5), the door (7) normally tends to close the additional nozzle (5b) provided at the end of the inclined conduit (5c) mounted on the back wall of the dispenser-hopper (5), as shown in figure 2.

When the latter reaches the height of each grated wall (4) that separates the contiguous cages (1), interference is spontaneously generated between the end of the horizontal rod (8) and one of the ears (7b) of the oscillating door (7).

Such an interference generates the backward movement of the section of the door (7) above the pivoting axis (X-X), thus generating the detachment of the larger section of the door (7) from the additional nozzle (5b), as shown in figure 3.

Because of such a detachment, the feed contained in the inclined conduit (5c) can travel downwards by gravity and fall into the openings (6a) of the two secondary feedboxes (6) in adjacent position.

The interference between the fixed rod (8) and the forward-travelling door (7) is maintained for the entire width of the latter, and is then eliminated.

In this way the door (7) is subjected again to the action of the return spring (7a) that tends to bring it back automatically and instantaneously against the corresponding additional nozzle (5b) in the position that ensures the closing of the latter.

It will open again only when it is subjected to a similar "overturning" interference generated by the horizontal rod (8) provided in the next grated wall (4) designed to support additional specimens of the secondary feedbox (6).

As illustrated in this description and in the three enclosed figures, the position of each secondary feedbox (6), together with its automatic loading modes, allow a cage equipped with the apparatus of the invention to considerably increase the total length of the feeding space for the hens, and consequently, to considerably increase the internal space (meaning the accommodation capacity of the hens calculated according to the normative provisions).

Referring to figure 1, the apparatus of the invention can be also appreciated with reference to its capability of favouring a limited controlled transfer of the feed towards the bottom of each cage (1), thus allowing the animals to scratch about and peck freely.

To that end, each secondary feedbox (6) is provided on the bottom of its end (6b) with a small through hole (9) through which a small quantity of feed is transferred downwards by gravity every time the feedbox (6) is filled.

In particular, this feed is collected above a scratching surface - practically consisting in a panel with continuous surface (10) - applied on the lower horizontal wall (3).

**Claims**

1. Apparatus designed to increase the accommodation capacity of a parallelepiped cage for hens with a front feedbox (2) fed by a dispensing nozzle (5a) provided at the base of a sliding dispenser-hopper (5), apparatus **characterised in that** it comprises:

   - a secondary feedbox (6) designed to be internally mounted on one of the lateral walls (4) of each cage (1), consisting in a slide-shaped channel arranged in such a way that the top opening (6a) externally protrudes on the front wall of the cage at a higher height than the front feedbox (2)
   - a downwards inclined conduit (5c) that protrudes from the back wall of the dispenser-hopper (5) and ends with an additional dispensing nozzle (5b) at a slightly higher height than the opening (6a) of the secondary feedbox (6)
   - means (7) designed to ensure permanent closing of said additional dispensing nozzle (5b)
   - means (8) designed to deactivate said closing means (7) of the additional dispensing nozzle (5b) only for the time needed for the nozzle (5b) to travel the space that corresponds to the width of the opening (6a) of the additional feedbox (6), together with the sliding dispenser-hopper (5).

2. Apparatus according to claim 1, **characterised in that**:

   - the closing means of the additional nozzle (5b) consists in an oscillating door (7) that is constantly subjected to the action of a return spring (7a) pivoted towards the upper end with the nozzle (5b) with respect to an axis (X-X) orthogonal to the longitudinal axis of the inclined conduit (5c)
- the means designed to favour the opening of the door (7) consists in a rod (8) that horizontally protrudes on the front of the grated side (4) with the additional feedbox (6), in such a position that it selectively interferes with two ears (7b) provided at the sides of the door (7) at a higher height than the pivoting axis (X-X).

**3.** Apparatus according to claim 1, **characterised in that** the secondary feedbox (6) mounted on one side of a grated side (4) has an opening (6a) in common with an analogous secondary feedbox (6) situated in adjacent parallel position on the opposite side of the grated side (4).

## Patentansprüche

**1.** Vorrichtung, die dazu geeignet ist, das Aufnahmevermögen eines quaderförmigen Hühnerkäfigs zu vergrößern, der mit einem frontalen Futtertrog (2) ausgestattet ist, der mittels Dosierdüse (5a) befüllt wird, die an der Basis eines gleitbaren Dosiertrichters (5) vorgesehen ist, wobei die Vorrichtung **dadurch gekennzeichnet ist, dass** sie Folgendes umfasst:

- einen Zusatzfuttertrog (6), der dazu geeignet ist, auf der Innenseite einer der Seitenwände (4) eines jeden Käfigs (1) angebracht zu werden, bestehend aus einem Rutschenkanal und so angeordnet, dass die obere Einmündung (6a) kurz auf der Außenseite der Vorderwand eines jeden Käfigs auf einer über dem frontalen Futtertrog (2) befindlichen Höhe übersteht;
- eine nach unten geneigte Leitung (5c), die aus der Rückwand des Dosiertrichters (5) auskragt und in einer zusätzlichen Dosierdüse (5b) endet, die auf einer knapp über der von der Einmündung (6a) des zweiten Futtertrogs (6) besetzten Höhe angeordnet ist;
- Mittel (7), die dazu geeignet sind, einen permanenten Verschluss der zusätzlichen Dosierdüse (5b) zu gewährleisten;
- Mittel (8), die dazu bestimmt sind, die Verschlussmittel (7) der Zusatzdosierdüse (5b) nur für den Zeitraum zu deaktivieren, der erforderlich ist, damit letztere fest mit dem gleitbaren Dosiertrichter (5) verbunden die Strecke durchlaufen kann, die der Breite der Einmündung (6a) des darunter befindlichen Zusatzfuttertrogs (6) entspricht.

**2.** Vorrichtung nach Anspruch 1, **dadurch gekennzeichnet:**

- **dass** die Mittel zum Verschluss der zusätzlichen Düse (5b) aus einer Klappe (7) bestehen, die ständig unter der Einwirkung einer Rückholfeder (7a) steht, die an ihrem oberen Ende an der Düse (5b) um eine Achse (X-X) drehbar gelagert ist, die rechtwinklig zur Längsachse der geneigten Leitung (5c) steht;
- **dass** die Mittel zur Öffnung der Klappe (7) aus einer Stange (8) bestehen, die horizontal auf der Vorderseite der ausgerüsteten Gitterwand (4) des Zusatzfuttertrogs (6) in einer Position auskragt, die es ihr ermöglicht, wahlweise in zwei Ösen (7b) einzugreifen, die an den Seiten der Klappe (7) auf einer über der Höhe der Drehachse (X-X) liegenden Höhe vorgesehen sind.

**3.** Vorrichtung nach Anspruch 1, **dadurch gekennzeichnet, dass** der Zusatzfuttertrog (6), der auf einer Seite eine Gitterwand (4) angebracht ist, eine gemeinsame Einmündung (6a) mit einem gleichartigen Zusatzfuttertrog (6) aufweist, der daran anschließend und parallel auf der der Gitterwand (4) gegenüberliegenden Seite angeordnet ist.

## Revendications

**1.** Equipement apte à augmenter la capacité réceptrice d'un cageot parallélépipède pour poules, équipé d'une mangeoire frontale (2) alimentée par des aliments pour animaux moyennant une buse de distribution (5a) prévue à la base d'une trémie-doseuse coulissante (5), équipement **caractérisé en ce qu'**il comprend :

- une mangeoire secondaire (6) apte à être montée à l'intérieur de l'une des parois latérales (4) de chacun des dits cageots (1), consistante en un collecteur conformé en forme de toboggan et disposé de manière à ce que son embouchure supérieure (6a) déborde brièvement sur l'externe de la paroi antérieure du respectif cageot, à une cote sus-jacente à celle de la dite mangeoire frontale (2)
- un conduit incliné vers le bas (5c) qui déborde de la paroi postérieure de la dite trémie-doseuse (5), terminé par une buse de distribution supplémentaire (5b) positionnée à une cote juste un peu supérieure à celle occupée par l'embouchure (6a) de la dite mangeoire secondaire (6)

- un moyen (7) apte à assurer la fermeture permanente de la dite buse de distribution supplémentaire (5b)
- un moyen (8) destiné à désactiver le dit moyen de fermeture (7) de la buse de distribution supplémentaire (5b) pour le seul temps nécessaire à la dite buse (5b) de parcourir, solidairement à la dite trémie-doseuse coulissante (5), l'espace correspondant à la largeur de l'embouchure (6a) de la sous-jacente mangeoire supplémentaire (6).

2. Equipement selon la revendication 1, **caractérisé en ce que** :

- le dit moyen de fermeture de la buse de distribution supplémentaire (5b) consiste en un volet basculant (7) qui est constamment sujet à l'action d'un ressort de rappel (7a), et qui résulte pivoté, vers son extrémité supérieure, à la buse même (5b) par rapport à un axe (X-X) orthogonal à l'axe longitudinal du dit conduit incliné (5c)
- le dit moyen apte à favoriser l'ouverture du dit volet (7) consiste en une petite tige (8) qui déborde horizontalement en face avant du bord grillagé (4) dont la mangeoire supplémentaire (6) est dotée, dans une position telle qu'elle lui permet d'interférer sélectivement avec deux oeillets (7b) prévus sur les côtés du volet (7), à une cote supérieure à celle du dit axe de pivotement (X-X).

3. Equipement selon la revendication 1, **caractérisé en ce** la dite mangeoire secondaire (6) montée sur un côté d'un bord grillagé (4) présente une embouchure (6a) commune avec une mangeoire secondaire analogue (6), qui lui est adjacente et parallèle, positionnée sur le côté opposé du même bord grillagé (4).

FIG. 1

FIG. 2

FIG. 3